Europäisches Patentamt

European Patent Office

Office européen des brevets

(19)

(11) **EP 1 315 370 A2**

(12) **EUROPEAN PATENT APPLICATION**

(43) Date of publication:
**28.05.2003 Bulletin 2003/22**

(51) Int Cl.7: **H04N 5/235**

(21) Application number: **02026197.0**

(22) Date of filing: **25.11.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **27.11.2001 US 333146 P
19.08.2002 US 222876**

(71) Applicant: **Creo IL. Ltd.
46103 Herzlia Pituah (IL)**

(72) Inventor: **Barkan, Stanley
30825 D.N. Hof HaCarmel (IL)**

(74) Representative: **Hofmann, Harald
Sonnenberg Fortmann,
Postfach 33 08 65
80068 München (DE)**

(54) **Precision exposure setting in a digital imaging device**

(57)    A digital imaging system comprising an image capture unit having a given dynamic range for capturing an image as a plurality of pixels using exposure parameters, and a pixel exposure level measuring unit for determining an exposure level of at least one of said pixels, the system further comprising an exposure parameter level selector, associated with said pixel exposure level measuring unit, for selecting a level of one of said exposure parameters for a full image capture, using measured pixel brightness levels of a calibration image capture, said selection being made to maximize utilization of said dynamic range.

Fig. 1

**Description**

The present invention relates to precision exposure setting in a digital imaging device such as a camera, and more particularly but not exclusively to precision setting that may be carried out online using the imaging device.

Digital cameras, like all other cameras, require correct exposure levels in order to produce good images under different lighting conditions. Generally, exposure levels in cameras are set using two exposure parameters, shutter speed and lens aperture. When setting the exposure level it is usual to take one of these two parameters as fixed and to alter the other to achieve the desired exposure level. An ideal exposure level is one that allows full advantage to be taken of the dynamic range of the sensor.

In state-of-the-art film cameras, the shutter speed and lens aperture are set according to an exposure meter reading, either automatically by the camera or manually by the user. Automatic metering is usually carried out in one of several different ways, e.g. spot metering, integrated metering or area metering. In all cases an approximate measure is reached to balance various parts of the scene to be exposed to obtain an optimum exposure setting.

In digital imaging, as with Leaf camera backs, obtainable from Creo Inc., Canada, the correct exposure is optimally determined by the value given to the brightest pixels containing image detail in the scene. Those pixels in which details are just visible are preferably required to achieve a fixed predetermined value. Optimal exposure requires a range of pixel brightness levels extending across the full dynamic range of the sensor, and is obtained when the correct amount of light for any given image is exposed to the sensor, which light is determined by the correct combination of shutter speed and lens aperture.

In the LeafCapture application, obtainable from Creo , Inc., Canada, it is possible to determine when the correct speed and aperture combination have been set, by viewing the captured image on the computer monitor under a special viewing option. In this view, pixels that have been overexposed are distinctively highlighted. If these highlighted pixels appear only in extremely bright areas of specular reflection, the image is correctly exposed. Otherwise, additional captures are made and viewed as described above, until optimal exposure is obtained. It is possible to use a hand-held light-metering device to make the exposure determination process efficient but even so, the selection of the optimal combination is often a matter of trial and error, requiring several trial captures in order to make the selection.

There is a need for a more automated exposure optimization process. There is also a need for an exposure optimization process that can be performed online, either in the camera, or using a computer or like device connected online to the camera.

According to a first aspect of the present invention there is thus provided a digital imaging system comprising an image capture unit having a given dynamic range for capturing an image as a plurality of pixels using exposure parameters, and a pixel exposure level measuring unit for determining an exposure level of at least one of said pixels, the system further comprising an exposure parameter level selector, associated with said pixel exposure level measuring unit, for selecting a level of one of said exposure parameters for a full image capture, using measured pixel brightness levels of a calibration image capture, said selection being made to maximize utilization of said dynamic range.

The system preferably comprises display functionality for indicating pixels extending over a threshold brightness level using said selected exposure parameter level, thereby to enable a user to select an optimal setting for said exposure parameter.

Preferably, said image capture unit comprises calibration image capture control functionality to capture successive images until an image is obtained whose brightest pixels are just within a borderline exposure level, said image being subsequently usable as said calibration image.

Preferably, said borderline is a predetermined minimal exposure level.

Preferably, said borderline is a predetermined saturation exposure level.

The system preferably comprises a user image region selector for allowing a user to select a critical exposure region from which to obtain said measured pixel brightness levels.

Preferably, said image capture unit comprises calibration image capture control functionality to capture successive images until an image is obtained whose brightest pixel is just below an overexposure level, said image being usable subsequently as said calibration image.

Preferably, said image capture unit comprises calibration image capture control functionality to capture successive trial images until an image is obtained whose darkest pixel is just above a predetermined minimal exposure level, said image being usable subsequently as said calibration image.

The system preferably comprises a pixel brightness extrapolator, associated with said exposure parameter level selector for calculating for at least some of said pixels a future exposure level by multiplying a current exposure level by ratios of respective calibration and selected exposure parameters.

Preferably, said exposure parameter is one of shutter speed and aperture size.

The system preferably comprises an image display, associated with said pixel brightness extrapolator, for displaying said calibration image capture such as to highlight pixels indicated by said future exposure level to be overexposed.

The system preferably comprises an image display, associated with said pixel brightness extrapolator, for displaying said calibration image capture such as to highlight pixels indicated by said future exposure level to be underexposed.

The system preferably comprises an output display, associated with said exposure parameter level selector, for displaying said selected exposure parameter level, for use in said full image capture.

Preferably, said exposure parameter level selector is operable to select an exposure parameter level such that a predetermined number of pixels extend beyond a threshold brightness level.

Preferably, said predetermined number is user provided.

Preferably, said predetermined number is obtained from an analysis of pixel brightness distribution of said calibration image.

Preferably, said analysis is of a user selected area of said calibration image.

Preferably, said analysis is of an in-focus area of said calibration image.

Preferably, said analysis is of an area of said calibration image determined by spatial analysis of the calibration image.

Preferably, said threshold brightness level is an underexposure threshold.

Preferably, said threshold brightness level is a saturation level.

The system preferably comprises two exposure parameters, wherein one of said exposure parameters is held constant, and the second is used for altering in said extrapolator.

The system is preferably incorporated within a digital camera.

Preferably, said image capture unit is contained within a camera, and wherein said exposure parameter level selector is contained within a computing device connectable to said camera.

According to a second aspect of the present invention there is provided an exposure optimizing method for a digital image capture device, comprising:

capturing a series of images whilst altering an exposure parameter until an image having at least one pixel having a brightness level close to a borderline state is obtained for use as a calibration image,

calculating an exposure setting, from said calibration image, to maximize utilization of an image capture dynamic range, and

capturing a full image using said calculated exposure setting.

The method preferably comprises:

allowing a user to manually alter said calculated exposure setting, and
calculating by extrapolation an effect on pixels of said calibration image of said manual alteration.

The method preferably comprises highlighting on a display pixels determined by said extrapolation to be overexposed, thereby to allow said user to appraise said manual alteration.

The method preferably comprises highlighting on a display pixels determined by said extrapolation to be underexposed, thereby to allow said user to appraise said manual alteration.

Preferably, said calculating an exposure setting comprises providing a setting corresponding to a preselected number of pixels whose brightness levels extend beyond a predetermined level.

The predetermined level may be a saturation level.

Alternatively, the predetermined level may be an underexposure threshold.

Preferably, said calculating an exposure setting comprises
    profiling said calibration image to calculate a maximum number of pixels it is desirable to have exceeding a borderline state, and
    using an exposure setting corresponding to a predetermined number of pixels exceeding said borderline state.

For a better understanding of the invention and to show how the same may be carried into effect, reference will now be made, purely by way of example, to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:

Fig. 1 is a simplified block diagram of a digital imaging system operable for carrying out precision exposure setting according to a first embodiment of the present invention,

Fig. 2 is a simplified functional diagram showing options for image processing to arrive automatically at a precision exposure setting in accordance with an embodiment of the present invention,

Fig. 3 is a flow chart showing a generalized procedure for carrying out precision exposure setting according to an embodiment of the present invention,

Fig. 4 is a simplified flow chart showing a procedure for carrying out precision exposure setting manually and without flash, according to an embodiment of the present invention

Fig. 5 is a simplified flow chart showing a variation of the manual procedure without flash of Fig. 4, in which exposure setting is according to minimal exposure levels,

Fig. 6 is a simplified flow chart showing a programmed or semi-automatic procedure for precision exposure setting without flash, according to an embodiment of the present invention, and

Fig. 7 is a simplified flow chart showing a programmed or semi-automatic procedure for precision exposure setting with flash, according to an embodiment of the present invention.

The present embodiments provide a method and apparatus for finding optimal exposure levels in a digital camera. A series of trial captures are taken by opening the shutter and performing a series of image integrations until pixels are just on the overexposure (or underexposure) borderline, and then an extrapolation of the capture is made for different alteration levels of one of the exposure parameters. For each extrapolation an image is displayed, preferably on the camera display and preferably side-by-side with other extrapolation images, each of which highlights overexposed or underexposed pixels. The photographer is able to select the ideal exposure parameters on the basis of the extrapolations.

In a variation, the capture itself is analyzed and a maximum desirable number of overexposed or underexposed pixels is obtained. The number is used to automatically select the correct extrapolation and use the corresponding exposure level. Thus, the exposure level is selected entirely automatically.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

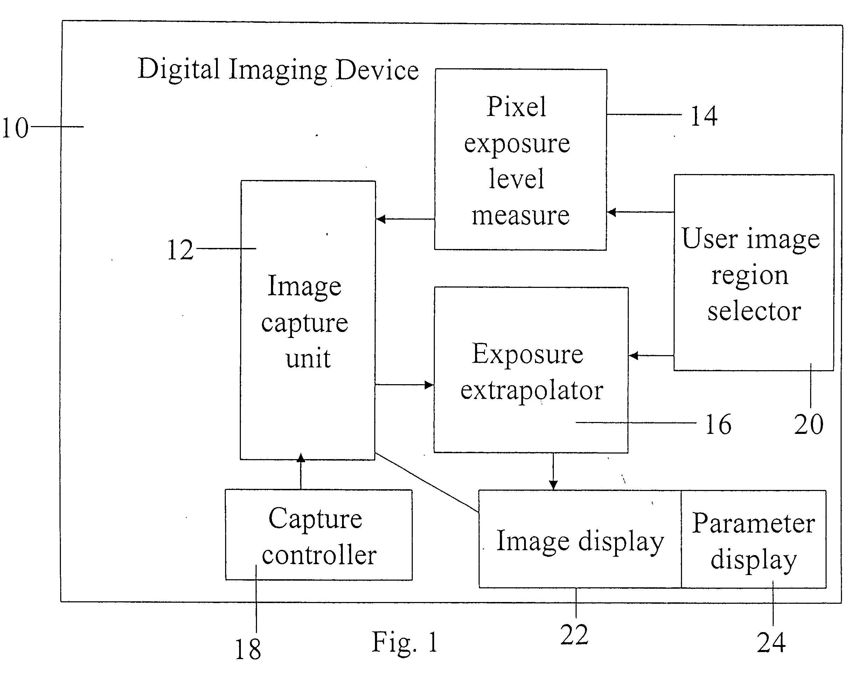

Reference is now made to Fig. 1, which is a simplified block diagram of a digital image capture device suitable for precision exposure setting according to a first embodiment of the present invention. Fig. 1 shows a digital imaging system 10 comprising an image capture unit 12 for capturing an image as a plurality of pixels, and a pixel exposure level measuring unit 14 for determining exposure levels of the pixels. The device further comprises a calculation unit (extrapolator) 16 which may, depending on the mode being used, either determine an effect on the pixels of altering an exposure parameter, thereby to permit a user to set the exposure parameter to provide optimal exposure, or may directly determine an exposure parameter setting based on pixel brightness distribution in the image, as will be described in greater detail below.

The image capture unit is controlled by a controller 18 which uses pixel exposure levels to control the capture unit to open and close the shutter and capture successive trial images, whilst changing exposure parameters, typically integration time, until a last image is obtained whose brightest (or darkest) pixels are just within a borderline exposure level. The last image obtained is used as a calibration image for subsequent processing by the extrapolator. The controller and the calculation unit are preferably implemented in software.

The borderline level used may typically be either a preset minimal exposure level or a saturation exposure level. If it is a minimum exposure level then it enables shadow areas in the image to be used for extrapolation by ensuring that the exposure level is sufficient to just differentiate shadow detail. If the saturation level is used then the exposure level is set to allow detail differentiation in the brightest areas of the image for the calculation unit 16 to extrapolate from.

A preferred embodiment of the present invention comprises a user image region selector 20, which allows a user to select a region of the image displayed on the back of the imaging device. The selector allows user interaction with the displayed image, preferably via a pointing device or cursor. The search for bright or dark pixels and/or the carrying out of extrapolation may then be restricted to the region selected by the user. Thus, the user may select what he considers to be a critical exposure region, typically either a bright region such as a region of specular reflection, or a dark region in which he is particularly interested in obtaining detail.

The calculator 16 operates in a manual mode to determine the effect on the calibration image of changing one of the exposure parameters. The ideal exposure image may be that in which a highlight detail pixel or group of pixels just approaches a borderline value, or that in which a certain number of shadow detail pixels have exceeded the borderline. The calculator, basing itself on the calibration image, extrapolates pixel brightness levels for the changed parameter. The extrapolation may be carried out using the entire image, using pixels recognized as borderline in the calibration image, using pixels in a region selected by the user via selector 20, or using pixels recognized as borderline in a region selected by a user. Preferably, the calculator calculates, for the selected pixels, a future exposure level by multiplying a current exposure level by ratios of respective current and future exposure parameters. A specific formula is provided below. In an automatic mode, as described above, the camera uses brightness distribution analysis to determine which pixels should be borderline and sets an exposure parameter accordingly. In both manual and automatic mode the intention is to make best use of the dynamic range of the sensor.

The skilled person will appreciate that typical exposure parameters are shutter speed and aperture size. Generally, one of the parameters is held constant and the other is varied in order to find the ideal exposure.

A digital imaging device, such as a digital camera, typically incorporates an image display 22. The image display 22 is preferably associated with the calculator 16, and is able to display the calibration image that has been captured and is being used by the extrapolator, with the additional feature that it receives, from the extrapolator, information as to which pixels have exceeded the borderline so that it is able to display them together with a visual indication of their state. In a preferred embodiment the pixels in question are highlighted. The display is thus able to highlight overexposed or underexposed pixels and thereby give the user an intuitive picture of the effectiveness of the current exposure parameters.

The display 22 may additionally display a histogram of exposure levels against pixel numbers. The histogram may typically be superimposed upon the image and for each extrapolation, the overexposed or underexposed pixel columns may be highlighted.

The imaging device typically also comprises readout display 24, which is intended for display of data. The readout display 24 may be associated with the calculator 16, so that it can display an exposure parameter value being used in a current extrapolation. The exposure parameter can be provided to the user for information, the actual exposure being set automatically for taking the image when the user accepts the extrapolation, or the user can manually enter the displayed parameter, if desired. The readout display 24 may often simply be a data display function superimposed on the image screen 22.

In use, a first exposure parameter such as the aperture is fixed and a second exposure parameter such as the shutter time is allowed to vary. The imaging device is aimed for imaging, a series of images is taken over successively increasing or decreasing integration times until a calibration image is arrived at, which is the image at which one or more pixels approaches a borderline saturation or minimum exposure level. In manual mode at least one extrapolation level of the variable exposure parameter is calculated and the resulting image or images are shown on the device display, with pixels that would, for the extrapolated variable exposure parameter, exceed the borderline being highlighted. The extrapolation may be carried out for the entire image or for a region of the image selected by the user using a selection device such as a cursor. The user views various extrapolations and selects according to his preferences. The full image is then taken at the exposure parameter corresponding to the selected extrapolation. The automatic mode relies on pixel brightness analysis over the image or part thereof, as described in greater detail below.

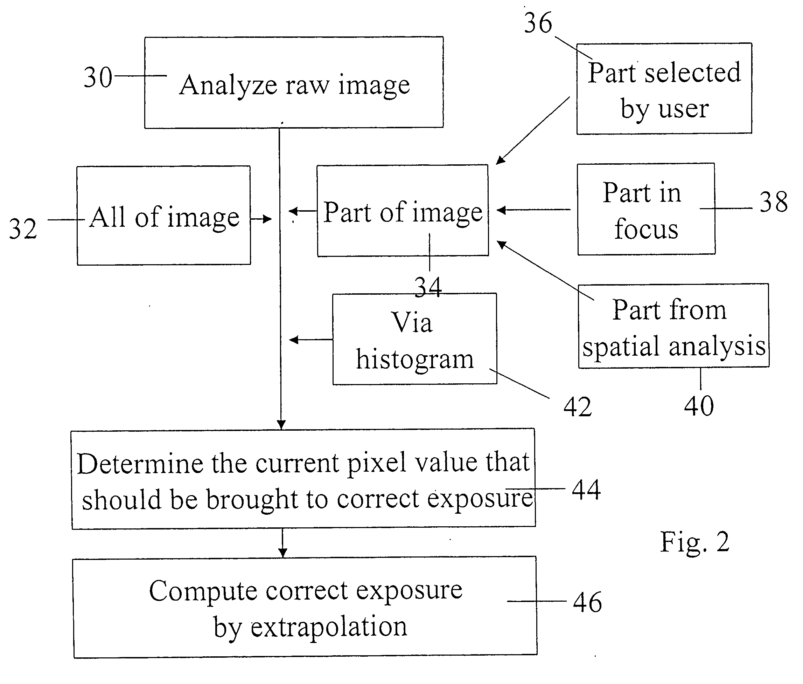

Reference is now made to Fig. 2, which is a simplified functional diagram showing how a fully automatic system can be provided for setting exposure levels. First of all a calibration image is obtained as explained above i.e. a series of images is taken until all the pixels are just below the overexposure borderline (or just above the underexposure borderline), The calibration image is analyzed 30, typically for brightness levels. The analysis may be carried out on the entire image 32, or on a part of the image 34. The part may be a user selected part of the image 36, a part determined to be correctly focused 38, or a part indicated by some kind of spatial analysis of the captured data 40 For example, areas which contain similar pixels may be removed from the histogram analysis by excluding pixels whose value is very similar to the pixel immediately preceding it.

The analysis of brightness levels is typically carried out by constructing a histogram of brightness levels against numbers of pixels, 42. The histogram may for example show that a certain number of pixels are bunched in close proximity to the borderline level whereas the main bulk of the histogram is more than a certain threshold lower. This is indicative of a spotlight situation where the bunch of pixels are from specular reflections in the scene. Selection function 44 may then select the highest values in the main bulk of the histogram as the pixels which must be just within exposure (whereas the specular reflections can be overexposed).

The step of setting an exposure parameter 46 then proceeds by computing the correct exposure so that the highest values in the main bulk of the histogram as set by selection function 44 will be within the exposure range, whereas the specular reflections are overexposed .

In a variation of the embodiment of Fig. 2, the user presets a fixed proportion of overexposed or underexposed pixels that he considers appropriate for the final image. The imaging device 10 then automatically selects for the extrapolation corresponding to the user set proportion of overexposed or underexposed pixels, rather than arriving at a number from analysis of the calibration image.

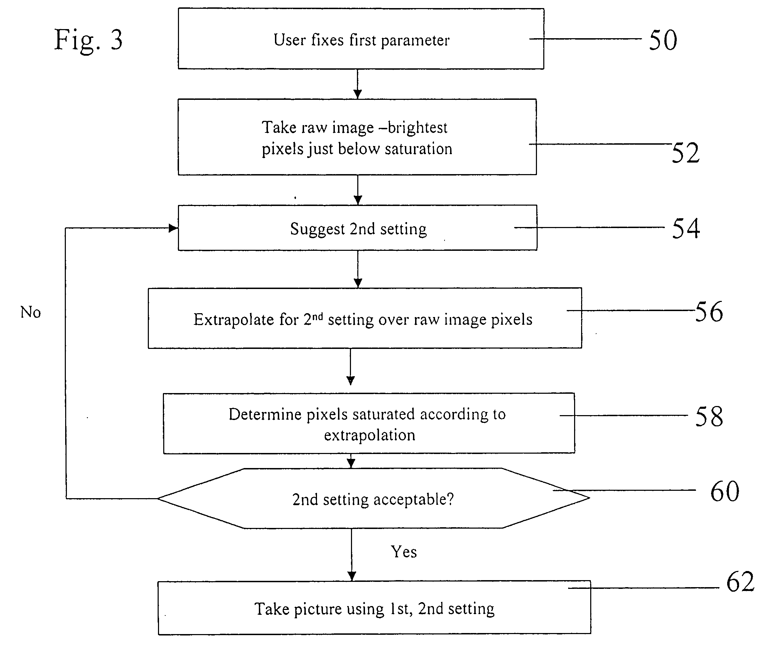

Reference is now made to Fig. 3, which is a simplified flow chart showing a generalized embodiment of the present invention. In the embodiment the user first selects 50 which of the two exposure parameters, shutter speed and aperture, to hold fixed and which to vary. One or more trial captures is carried out to obtain a calibration image, as described above, in a stage 52. The raw image is analyzed, typically using histogram analysis, to determine the pixel brightness distribution. A suggested setting is then made in stage 54, typically automatically, from the histogram, for example by setting a brightness level so that - 0.02 percent of the calibration image is at saturation. A stage 58 involves highlighting those pixels which are over or underexposed according to the extrapolation in stage 56. The current parameters are now used for capture of the full image. Optionally, a manual mode may be selected in which the user may choose not to select the current setting. If the setting is not accepted then flow loops back to stage 54 in which a new parameter setting is suggested.

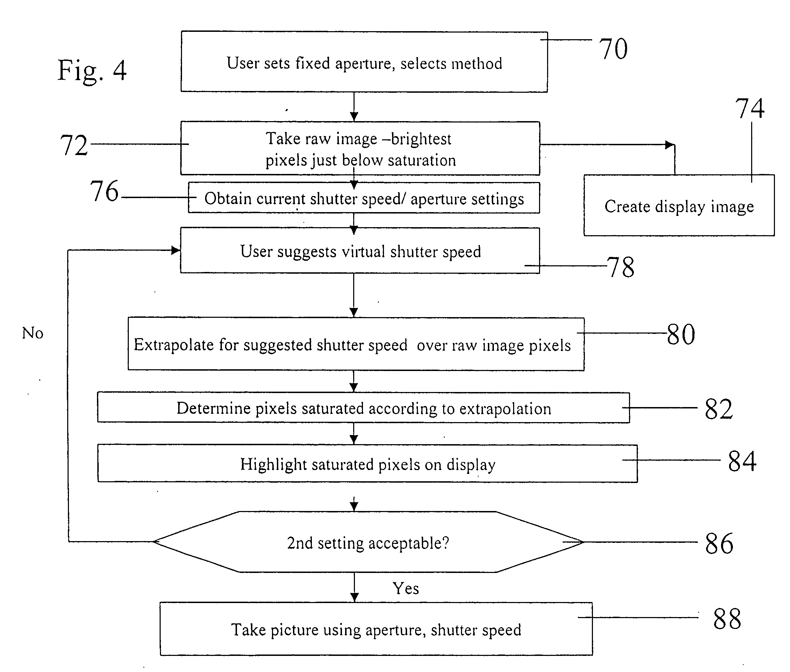

Reference is now made to Fig. 4, which is a simplified flow chart showing a procedure for use of the presently described embodiments for manual exposure without the use of a flash.

In step 70 the user firstly selects which of the exposure parameters to retain as fixed and which to vary. Assuming the user desires a fixed aperture, the camera body is set to the desired aperture. The user selects a user option for obtaining exact exposure by the present method, on the camera digital control or back.

Step 72 concerns obtaining of the calibration image. The shutter is opened by instruction from the digital control part of the camera and the sensor is exposed to light. The shutter remains open for enough time for a series of images to be taken, the series terminating with the calibration image as described above. While the shutter is open, the back takes an initial series of images while reducing or increasing integration time, until it manages to capture an image in which the brightest pixel is just less than saturated, that is to say until it finds the calibration image. The calibration image is used for computation purposes. In a step 74, a display image is computed by increasing the brightness and/or contrast of the calibration image according to methods such as histogram equalization or other image display optimizing techniques. The display image is used only for display purposes, and does not form part of the procedural flow. The display image is viewed on the camera back digital display 22. The shutter is then closed. The calibration image may be a low-resolution video-rate image to facilitate rapid formation of the initial series of images. A refresh rate of such a real-time image was recorded at approximately 1/10 sec, when using the Leaf C-Most sensor, obtainable from Creo, Inc., Canada.

In step 76, the back obtains the current (manually set) aperture setting and also the speed setting that was used to take the calibration image, from the camera body. Generally, the calibration image is not taken using the same settings as the equivalent full image, and therefore it is necessary to determine what would happen if a full image were taken with settings equivalent to those used for taking the calibration image. Thus, in a stage 78, the back now uses the calculator 16 to compute what the values of the pixels in the captured image would be if the current settings were used by the camera to take a full image. The computation is carried out on the calibration image in stage 80. All pixel locations that would be overexposed when a picture is taken with the given shutter speed and aperture combination are displayed with a colorful highlight overlay in the display image in the digital display on the back.

The formula for computation of overexposed pixels using a raw image with no saturated pixels is as follows:

Let *currentIntegrationTime* be the time each pixel is currently exposed to light

Let *desiredAperture* be the set, desired aperture.

Let *currentAperture* be the aperture under which the shutter is opened for the exposure determination process. This may typically be the desired aperture or the full aperture for the given camera.

Let *suggestedShutterSpeed* be the shutter speed suggested for the actual exposure.

Let *current Value* be the value obtained at the pixel location in the raw exposure with *currentIntegrationTime* and *currentAperture*

Let *expectedValue* be the value to be obtained at the pixel location in the actual exposure with *desiredAperture* and *suggestedShutterSpeed.*

Let *thresholdValue* be the fixed value above which pixels are overexposed.

Then:

$$expectedValue = currentValue \times \frac{suggestedShutterSpeed \times desiredAperture}{currentIntegrationTime \times currentAperture}$$

When *expectedValue* is greater than *thresholdValue,* the pixel is determined to be overexposed, and, in step 84 the overexposed pixels are highlighted.

The back displays a representation of the camera speed and aperture settings as part of a user display 24. The user may optionally change the suggested shutter speed, in effect providing a virtual speed setting, on the camera back, and repeat the extrapolation via the loop shown in dotted lines.

When the user is satisfied, for example that only specular reflections are overexposed, step 86, then the user can set the camera body to the indicated shutter speed and take the picture with the correct aperture and speed settings, step 88.

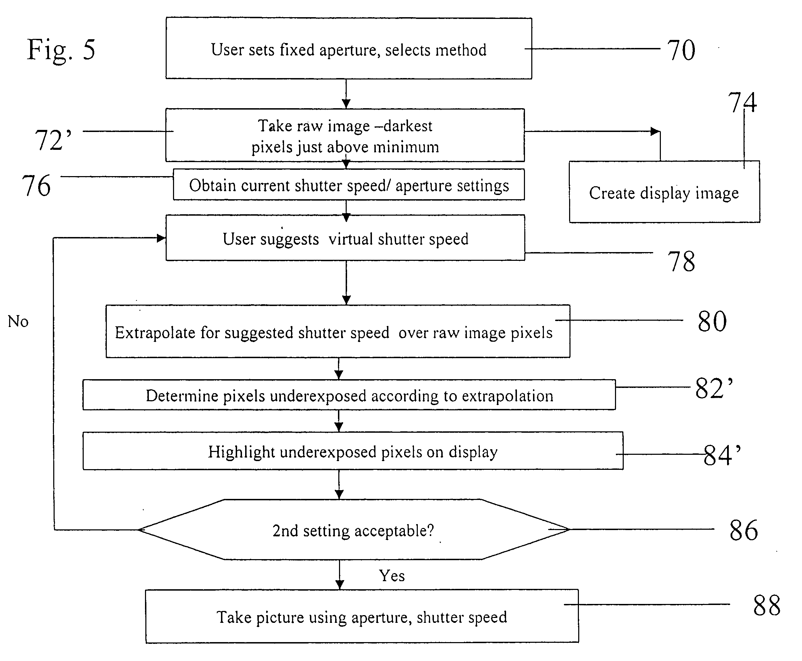

Reference is now made to Fig. 5, which is a simplified flow chart showing the procedure of Fig. 4 modified for use of minimum exposure levels rather than saturation exposure levels. Steps that are the same as those in Fig. 4 are given the same reference numerals and are not described again except as necessary for an understanding of the present embodiment.

The calibration image is selected in the same way as before, but, instead of using the saturation level as the borderline, a predetermined minimum exposure level is selected in a step 72'.

The extrapolation calculation is the same, except that in step 82' a different threshold is used and in step 84' it is underexposed pixels which are identified. The identified pixels are however highlighted as before.

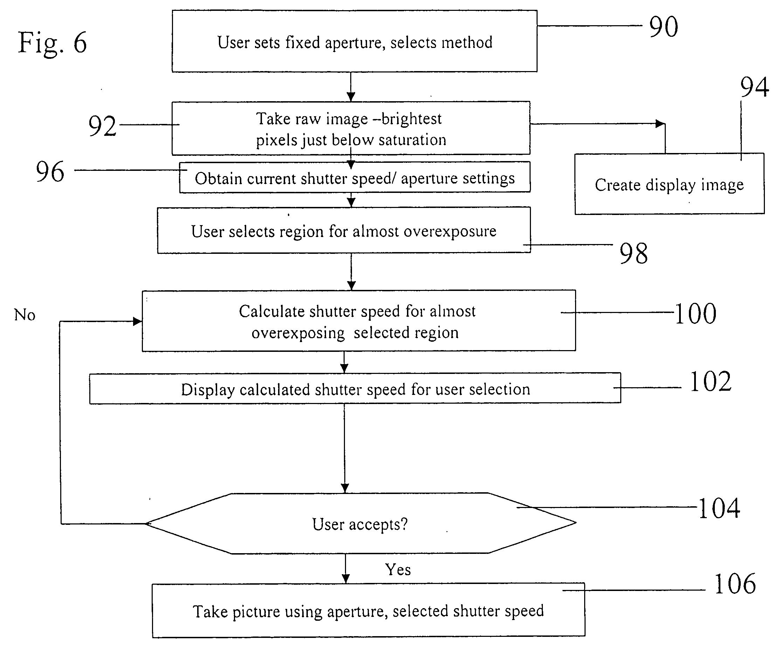

Reference is now made to Fig. 6, which is a simplified flow chart showing a procedure for using the above embodiments for programmed or semi-automatic exposure without flash.

As with Fig. 4, it is assumed, in a first step 90, that the user desires a fixed aperture, and the first stage is to set the camera body to the desired aperture. The user selects the user option for obtaining exact exposure by the present method, on the camera back.

Steps 92 to 96 are performed as in the embodiment of Fig. 4.

In a step 98, the user makes use of the image region selector 20 to select an area on the display image that he feels should obtain the highest detailed brightness, i.e. all brighter pixels are to be overexposed.

In a step 100, the camera back directly calculates the correct speed for achieving the desired exposure, using the raw image as a basis. The formula for direct calculation of the correct speed is:

$$suggestedShutterSpeed = \frac{thresholdValue \times currentIntegrationTime \times currentAperture}{currentValue \times desiredAperture}$$

In the above formula, *currentValue* is the average value of a small neighborhood in the raw image at the selected location. The remaining variables are as defined hereinabove. The shutter speed, as calculated in the above formula, is preferably displayed on the readout display 24 in step 102.

The shutter speed may then be used directly by the camera in order to take a photograph. Alternatively, the user may read the indicated shutter speed, set the shutter speed control and shoot manually.

The above embodiments have all been described in respect of a fixed aperture. It will be appreciated that in each case it is possible to fix the shutter speed and to leave the aperture as a variable. In such a case, the capture of the calibration image is carried out by keeping a fixed integration time, and changing the aperture. In subsequent calculations, changes to the aperture are inserted into the following formula.

$$suggestedAperture = \frac{thresholdValue \times currentIntegrationTime \times currentAperture}{currentValue \times desiredIntegrationTime}$$

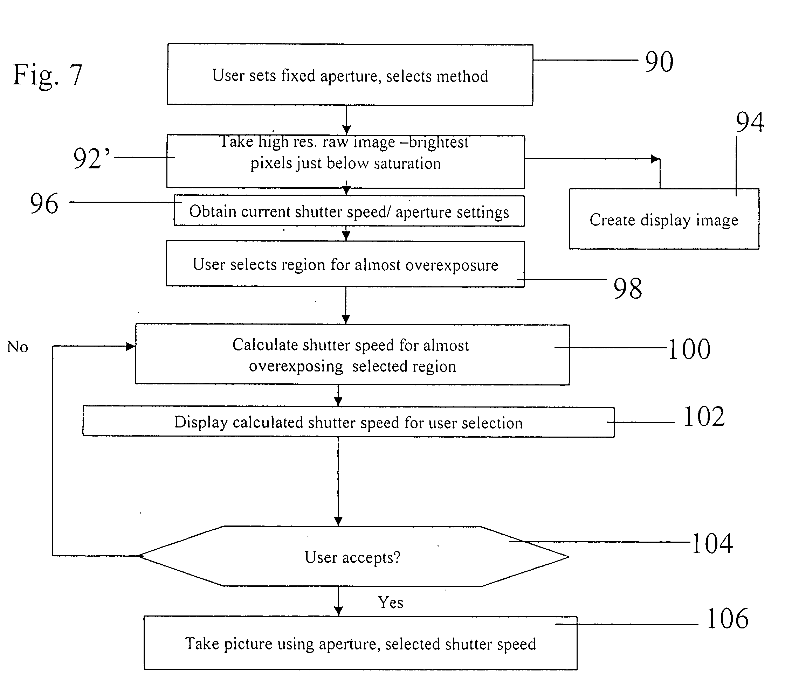

Reference is now made to Fig. 7, which is a simplified diagram showing a procedure for use with the present embodiments for providing programmed or semi-automatic exposure with the use of a flash. The procedure is very similar to that of Fig. 6 and steps that are the same are given the same reference numerals and are not described again except as necessary for an understanding of the present embodiment. Generally the use of a flash for taking the full image requires that the flash also be used in the calibration image because otherwise it is difficult or impossible to carry out an accurate extrapolation.

Assuming the user desires a fixed aperture, then in step 90, the camera body is set to the desired aperture. The user selects the user option for obtaining exact exposure by the present method, on the camera back.

In step 92' the back controls the image capture unit to take a series of images while reducing or increasing lens aperture, until the brightest pixel in the image is just less than saturated. In the case of the present procedure the series comprises high-resolution captures made using a flash. The final image is the calibration image, as before. A display image is computed in step 94. The display can be in any desired resolution up to 1:1.

Steps 96 to 106 are carried out as for Fig. 6.

The above embodiment has been described in respect of a varying aperture. It will be appreciated that for flash photography the shutter speed is usually fixed, but it is possible to fix the aperture and to use the flash strength as a variable, if it is automatically controllable from the camera. In such a case, the capture of the calibration image is carried out by keeping a fixed integration time and aperture, and changing the flash strength. In subsequent calculations, changes to the flash strength are inserted into the following formula.

$$suggestedFlashStrength$$

$$= \frac{thresholdValue \times currentFlashStrength}{currentValue \times desiredFlashStrength}$$

In all of the above embodiments, various parts of the procedure may be carried out automatically, or alternatively the camera may give instructions to the user, via the readout display 24, to carry out the respective stage.

It will be appreciated that, although in the above it is assumed that the extrapolation of pixel brightness values and the calculation of correct exposure times are carried out within the camera, in another preferred embodiment, the extrapolation and calculations are carried out on a computer or like device to which the camera is connected on line.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

It will be appreciated by persons skilled in the art that the present invention is not limited to what has been particularly shown and described hereinabove. Rather the scope of the present invention is defined by the appended claims and includes both combinations and subcombinations of the various features described hereinabove as well as variations and modifications thereof which would occur to persons skilled in the art upon reading the foregoing description.

**Claims**

1. A digital imaging system comprising an image capture unit having a given dynamic range for capturing an image as a plurality of pixels using exposure parameters, and a pixel exposure level measuring unit for determining an exposure level of at least one of said pixels,

   the system further comprising an exposure parameter level selector, associated with said pixel exposure level measuring unit, for selecting a level of one of said exposure parameters for a full image capture, using measured pixel brightness levels of a calibration image capture, said selection being made to maximize utilization of said dynamic range.

2. The imaging system of claim 1, further comprising display functionality for indicating pixels extending over a threshold brightness level using said selected exposure parameter level, thereby to enable a user to select an optimal setting for said exposure parameter.

3. The imaging system of claim 1 or claim 2, wherein said image capture unit comprises calibration image capture control functionality to capture successive images until an image is obtained whose brightest pixels are just within a borderline exposure level, said image being subsequently usable as said calibration image.

4. The imaging system of claim 3, wherein said borderline is a predetermined minimal exposure level.

5. The imaging system of claim 3, wherein said borderline is a predetermined saturation exposure level.

6. The imaging system of any preceding claim, further comprising a user image region selector for allowing a user to select a critical exposure region from which to obtain said measured pixel brightness levels.

7. The imaging system of any preceding claim, wherein said image capture unit comprises calibration image capture control functionality to capture successive images until an image is obtained whose brightest pixel is just below an overexposure level, said image being usable subsequently as said calibration image.

8. The imaging system of any preceding claim, wherein said image capture unit comprises calibration image capture control functionality to capture successive trial images until an image is obtained whose darkest pixel is just above a predetermined minimal exposure level, said image being usable subsequently as said calibration image.

9. The imaging system of any preceding claim, further comprising a pixel brightness extrapolator, associated with said exposure parameter level selector for calculating for at least some of said pixels a future exposure level by multiplying a current exposure level by ratios of respective calibration and selected exposure parameters.

10. The imaging system of claim 9, wherein said exposure parameter is one of shutter speed and aperture size.

11. The imaging system of claim 9, further comprising an image display, associated with said pixel brightness extrapolator, for displaying said calibration image captures such as to highlight pixels indicated by said future exposure level to be overexposed.

12. The imaging system of claim 9, further comprising an image display, associated with said pixel brightness extrapolator, for displaying said calibration image capture such as to highlight pixels indicated by said future exposure level to be underexposed.

13. The imaging system of any preceding claim, further comprising an output display, associated with said exposure parameter level selector, for displaying said selected exposure parameter level, for use in said full image capture.

14. The imaging system of any preceding claim, wherein said exposure parameter level selector is operable to select an exposure parameter level such that a predetermined number of pixels extend beyond a threshold brightness level.

15. The imaging system of claim 14, wherein said predetermined number is user provided.

16. The imaging system of claim 14, wherein said predetermined number is obtained from an analysis of pixel brightness distribution of said calibration image.

17. The imaging system of claim 16, wherein said analysis is of a user selected area of said calibration image.

18. The imaging system of claim 16, wherein said analysis is of an in-focus area of said calibration image.

19. The imaging system of claim 16 wherein said analysis is of an area of said calibration image determined by spatial analysis of the calibration image.

20. The imaging system of any of claims 14 to 19, wherein said threshold brightness level is an underexposure threshold.

21. The imaging system of any of claims 14 to 19, wherein said threshold brightness level is a saturation level.

22. The imaging system of any preceding claim, comprising two exposure parameters, wherein one of said exposure parameters is held constant, and the second is used for altering in said exposure parameter level selector.

23. The imaging system of any preceding claim, incorporated within a digital camera.

24. The imaging system of any preceding claim, wherein said image capture unit is contained within a camera, and wherein said exposure parameter level selector is contained within a computing device connectable to said camera.

25. An exposure optimizing method for a digital image capture device, comprising:

capturing a series of images whilst altering an exposure parameter until an image having at least one pixel having a brightness level close to a borderline state is obtained for use as a calibration image,

calculating an exposure setting, from said calibration image, to maximize utilization of an image capture dynamic range, and

capturing a full image using said calculated exposure setting.

26. The method of claim 25, further comprising:

allowing a user to manually alter said calculated exposure setting, and calculating by extrapolation an effect on pixels of said calibration image of said manual alteration.

27. The method of claim 26, further comprising highlighting on a display pixels determined by said extrapolation to be overexposed, thereby to allow said user to appraise said manual alteration.

28. The method of claim 26, further comprising highlighting on a display pixels determined by said extrapolation to be underexposed, thereby to allow said user to appraise said manual alteration.

29. The method of any of claims 25 to 28, wherein said calculating an exposure setting comprises providing a setting corresponding to a preselected number of pixels whose brightness levels extend beyond a predetermined level.

30. The method of claim 29, wherein said predetermined level is a saturation level.

31. The method of claim 29, wherein said predetermined level is an underexposure threshold.

32. The method of any of claims 25 to 31, wherein said calculating an exposure setting comprises
profiling said calibration image to calculate a maximum number of pixels it is desirable to have exceeding a borderline state, and
using an exposure setting corresponding to a predetermined number of pixels exceeding said borderline state.

Fig. 1

Digital Imaging Device

10

12

Image capture unit

14

Pixel exposure level measure

20

User image region selector

16

Exposure extrapolator

18

Capture controller

22

Image display

24

Parameter display

EP 1 315 370 A2

Fig. 2

Fig. 3

- User fixes first parameter — 50
- Take raw image –brightest pixels just below saturation — 52
- Suggest 2nd setting — 54
- Extrapolate for 2nd setting over raw image pixels — 56
- Determine pixels saturated according to extrapolation — 58
- 2nd setting acceptable? — 60
  - No
  - Yes
- Take picture using 1st, 2nd setting — 62

EP 1 315 370 A2

Fig. 4

User sets fixed aperture, selects method —— 70

72 —— Take raw image –brightest pixels just below saturation

74

76 —— Obtain current shutter speed/ aperture settings

Create display image

User suggests virtual shutter speed —— 78

No

Extrapolate for suggested shutter speed over raw image pixels —— 80

Determine pixels saturated according to extrapolation —— 82

Highlight saturated pixels on display —— 84

2nd setting acceptable? —— 86

Yes

Take picture using aperture, shutter speed —— 88

EP 1 315 370 A2

14

Fig. 5

**User sets fixed aperture, selects method** — 70

**Take raw image –darkest pixels just above minimum** — 72'

— 74

**Create display image**

76 — **Obtain current shutter speed/ aperture settings**

**User suggests virtual shutter speed** — 78

**Extrapolate for suggested shutter speed over raw image pixels** — 80

**Determine pixels underexposed according to extrapolation** — 82'

**Highlight underexposed pixels on display** — 84'

No

**2nd setting acceptable?** — 86

Yes

**Take picture using aperture, shutter speed** — 88

EP 1 315 370 A2

Fig. 6

User sets fixed aperture, selects method — 90

Take raw image –brightest pixels just below saturation — 92

Create display image — 94

Obtain current shutter speed/ aperture settings — 96

User selects region for almost overexposure — 98

No

Calculate shutter speed for almost overexposing selected region — 100

Display calculated shutter speed for user selection — 102

User accepts? — 104

Yes

Take picture using aperture, selected shutter speed — 106

Fig. 7

User sets fixed aperture, selects method —— 90

94

92' —— Take high res. raw image –brightest pixels just below saturation

Create display image

96 —— Obtain current shutter speed/ aperture settings

User selects region for almost overexposure —— 98

No → Calculate shutter speed for almost overexposing selected region —— 100

Display calculated shutter speed for user selection —— 102

User accepts? —— 104

Yes

Take picture using aperture, selected shutter speed —— 106

EP 1 315 370 A2